# EUROPÄISCHE PATENTSCHRIFT

(11) **EP 2 384 273 B1**
(45) Veröffentlichungstag und Bekanntmachung des Hinweises auf die Patenterteilung: **01.07.2015**
(21) Anmeldenummer: 10705789.5
(22) Anmeldetag: 21.01.2010
(51) Int. Cl.: B29C 45/00, B29C 69/00, G09F 3/02

(54) **VERFAHREN UND VORRICHTUNG ZUR HERSTELLUNG VON MARKIERUNGSSCHILDERN**
METHOD AND DEVICE FOR PRODUCING MARKING LABELS
PROCÉDÉ ET DISPOSITIF DE RÉALISATION D'ÉTIQUETTES DE MARQUAGE

(30) Priorität: 31.01.2009 DE 102009006994
(43) Veröffentlichungstag der Anmeldung: 09.11.2011
(73) Patentinhaber: Phoenix Contact GmbH & Co. KG, 32825 Blomberg (DE)
(72) Erfinder: REIBKE, Heinz, 32105 Bad Salzuflen (DE)
(74) Vertreter: Michalski Hüttermann & Partner Patentanwälte mbB
(86) Internationale Anmeldenummer: PCT/EP2010/000343
(87) Internationale Veröffentlichungsnummer: WO 2010/086115

(56) Entgegenhaltungen:
- WO-A1-2005/044537
- WO-A1-2007/065532
- DE-A1- 2 936 810
- DE-U1- 29 700 812
- US-A- 4 361 230
- US-A- 4 503 006

## Beschreibung

Die Erfindung betrifft ein Verfahren sowie eine Vorrichtung zur Herstellung von Markierungsschildern, insbesondere von Markierungsschildern zur Markierung von elektronischen Bauteilen, wie Klemmen, Kabeln oder anderen Geräten.

Derartige Markierungsschilder bestehen üblicherweise aus einem Kunststoffmaterial und werden in einem Verfahrensschritt im Spritzgussverfahren hergestellt, indem geschmolzenes Kunststoffmaterial in ein Spritzgusswerkzeug gespritzt wird. Die Abmessungen der hergestellten Markierungsschilder sind dabei durch das Spritzgusswerkzeug vorgegeben. Die fertigen Markierungsschilder werden dem Spritzgusswerkzeug entnommen und können anschließend individuell bedruckt werden. Nachteilig hierbei ist es jedoch, dass für unterschiedliche Anwendungsbereiche Markierungsschilder unterschiedlicher Breite und/oder Länge benötigt werden, so dass für jedes Markierungsschild mit anderen Abmessungen ein eigenes Spritzgusswerkzeug hergestellt werden muss, was sehr aufwendig und sehr teuer ist. Insbesondere bei Markierungsschildern, welche nur in einer geringen Stückzahl hergestellt werden sollen, ist dieses Verfahren sehr unwirtschaftlich. Zudem muss, um beispielsweise das Spritzgussteil mit Perforationen zu versehen, bereits das Spritzgusswerkzeug derart konstruiert werden, dass während des Spritzgusses Perforationen im Spritzgussteil erzeugt werden, wodurch der Fertigungsaufwand und die Kosten für das Spritzgusswerkzeug noch einmal erheblich erhöht werden.

Aus der WO 2007/065532 ist ein Kennzeichnungsschildersatz mit in einer Ebene liegenden beschriftbaren Kennzeichnungsschildern bekannt. Dabei ist ein Zentralträger vorgesehen, an dem an zwei einander abgewandten Seiten jeweils mindestens ein langgestreckter Seitenträger mit einer seiner Schmalseiten angeformt ist, wobei mindestens einer der Seitenträger an mindestens einer seiner Längsseiten mindestens ein Kennzeichnungsschild trägt. Das Dokument DE-U-29700812 offenbart ein Verfahren zur Herstellung von Markierungsschildern zur Markierung von elektronischen Bauteilen, bei dem ein mattenförmiges Teil (10) hergestellt wird, und in einem zweiten Verfahrensschritt aus dem mattenförmigen Teil Markierungsschilder in einer beliebigen Breite oder einer beliebigen Länge hergestellt werden, wobei in dem zweiten Verfahrensschritt das mattenförmige Teil in einer Schneidvorrichtung geschnitten, in einer Stanzvorrichtung gestanzt und/oder in einer Perforationsvorrichtung perforiert wird. Aufgabe der Erfindung ist es daher, ein Verfahren sowie eine Vorrichtung zur Herstellung von Markierungsschildern, insbesondere von Markierungsschildern zur Markierung von elektronischen Bauteilen, zur Verfügung zu stellen, mit Hilfe dessen eine kostengünstige und flexible Fertigung von Markierungsschildern, insbesondere von Markierungsschildern, welche nur in einer geringen Stückzahl benötigt werden, möglich ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Das erfindungsgemäße Verfahren zur Herstellung von Markierungsschildern zur Markierung von elektronischen Bauteilen, umfasst einen ersten Verfahrensschritt, bei dem mittels eines Spritzgussverfahrens ein mattenförmiges Spritzgussteil hergestellt wird, und einen zweiten Verfahrensschritt, bei dem aus dem mattenförmigen Spritzgussteil Markierungsschilder in einer variablen Breite und/oder einer variablen Länge hergestellt werden. Die Herstellung von Markierungsschildern wird demzufolge gemäß der Erfindung in zwei Verfahrensschritten ausgeführt. Zunächst wird in einem ersten Verfahrensschritt ein mattenförmiges Spritzgussteil mittels eines Spritzgussverfahrens hergestellt. Anschließend wird das mattenförmige Spritzgussteil in einem zweiten Verfahrensschritt derart bearbeitet, dass aus dem mattenförmigen Spritzgussteil Markierungsschilder mit unterschiedlichen Abmessungen hergestellt werden. Die Breite und/oder die Länge der Markierungsschilder kann dabei je nach Verwendungszweck beliebig variiert werden. Dadurch, dass die endgültigen Abmessungen der Markierungsschilder nicht bereits beim ersten Verfahrensschritt, dem Spritzgießen, sondern erst beim zweiten Verfahrensschritt festgelegt werden, können für alle Markierungsschilder ein einheitliches Spritzgusswerkzeug verwendet werden. Es ist somit nicht mehr notwendig für jedes Markierungsschild ein eigenes Spritzgusswerkzeug herzustellen, wodurch eine erhebliche Kostenreduktion erzielt werden kann. Zudem ist das erfindungsgemäße Verfahren sehr flexibel, da die Breite und/oder die Länge der Markierungsschilder individuell und schnell anpassbar ist, da dies unabhängig von dem Spritzgussprozess und von dem dabei verwendeten Spritzgusswerkzeug erfolgen kann.

Nach einer vorteilhaften Ausführungsform der Erfindung wird in dem zweiten Verfahrensschritt das mattenförmige Spritzgussteil in einer Schneidvorrichtung geschnitten, in einer Stanzvorrichtung gestanzt und/oder in einer Perforationsvorrichtung perforiert. Insbesondere mittels des Schneidens und des Stanzen werden mittels eines einfachen Verfahrensschrittes die Abmessungen für das jeweilige Markierungsschild festgelegt. Dabei können ein oder mehrere Markierungsschilder aus einem mattenförmigen Spritzgussteil hergestellt werden. Mittels des Perforierens können beispielsweise Sollbruchstellen bei dem mattenförmigen Spritzgussteil erzeugt werden, welche die Ränder der Markierungsschilder darstellen, so dass der Anwender die Markierungsschilder zu einer beliebigen Zeit aus dem mattenförmigen Spritzgussteil leicht heraustrennen kann. Mittels des Schneidens, Stanzens oder Perforierens ist es auf einfache und kostengünstige Art und Weise möglich, die gewünschten Abmessungen für die herzustellenden Markierungsschilder zu erzeugen, wobei für jedes einzelne Markierungsschild spezielle Abmessungen leicht herstellbar sind, wodurch eine hohe Flexibilität bei der Fertigung erzielt werden kann.

Gemäß der Erfindung wird das im ersten Verfahrensschritt in ein Spritzgusswerkzeug gespritzte mattenförmige Spritzgussteil mittels eines Greifers dem Spritzgusswerkzeug entnommen und das entnommene mattenförmige Spritzgussteil wird mittels des Greifers zur Ausführung des zweiten Verfahrensschrittes der Schneidvorrichtung, der Stanzvorrichtung und/oder der Perforationsvorrichtung zugeführt. Mittels des Greifers kann das im ersten Verfahrensschritt hergestellte mattenförmige Spritzgussteil, nachdem es ausgehärtet ist, mittels eines einfachen konstruktiven Aufbaus leicht und schnell dem zweiten Verfahrensschritt zugeführt werden. Dafür ist vorzugsweise die Schneidvorrichtung, die Stanzvorrichtung und/oder die Perforationsvorrichtung unmittelbar neben der Spritzgussmaschine, insbesondere unmittelbar neben dem Spritzgusswerkzeug, angeordnet, so dass der Greifer einen möglichst geringen Weg beim Transport des mattenförmigen Spritzgussteiles überbrücken muss und der Greifer das mattenförmige Spritzgussteil direkt in die Schneidvorrichtung, die Stanzvorrichtung und/oder die Perforationsvorrichtung einlegen kann.

Um ein besonders schnelles und effektives Verfahren zu erzielen, kann gemäß einer bevorzugten Ausgestaltung der Erfindung das Schneiden, das Stanzen und/oder das Perforieren des mattenförmigen Spritzgussteiles mittels eines Lasers erfolgen. Durch die Verwendung eines Lasers können saubere Schnittkanten ohne Gratbildung erzielt werden. Zudem können mittels des Lasers sehr feine Konturen und radienfreie Innenkanten geschnitten werden. Ferner ist bei der Laserbearbeitung der thermische Einfluss gering, so dass das zu bearbeitende Material der mattenförmigen Spritzgussteile nicht beschädigt wird.

Die beim ersten Verfahrensschritt hergestellten mattenförmigen Spritzgussteile können verschiedene Ausgestaltungen aufweisen.

Gemäß einer vorteilhaften Ausführungsform der Erfindung wird beim ersten Verfahrensschritt ein mattenförmiges Spritzgussteil hergestellt, welches eine einstückige Fläche aufweist, aus der Markierungsschilder mit einer beliebigen Breite und einer beliebigen Länge hergestellt werden können. Derartige mattenförmige Spritzgussteile weisen eine besonders hohe Flexibilität bei ihrer Weiterverarbeitung auf, da hierbei aus einem Spritzgussteil auch mehrere Markierungsschilder mit unterschiedlichen Abmessungen hergestellt werden können. Insbesondere bei der Herstellung von Einzelstücken sind derartige mattenförmige Spritzgussteile vorteilhaft.

Nach einer weiteren vorteilhaften Ausführungsform der Erfindung wird beim ersten Verfahrensschritt ein mattenförmiges Spritzgussteil hergestellt, welches eine Fläche mit Aussparungen aufweist, wobei die Fläche zwischen zwei Aussparungen als Markierungsschild dienen kann, dessen Länge beliebig in dem zweiten Verfahrensschritt einstellbar ist. Dadurch, dass hierbei die Breite der Markierungsschilder bereits beim Spritzgussprozess während des ersten Verfahrensschrittes eingestellt wird, muss in dem zweiten Verfahrensschritt nur noch die Länge der Markierungsschilder eingestellt werden, so dass der Aufwand des zweiten Verfahrensschritts reduziert werden kann. Derartige mattenförmige Spritzgussteile sind insbesondere bei der Herstellung von gleichartigen Markierungsschildern in einer höheren Stückzahl vorteilhaft.

Ferner betrifft die Erfindung eine Vorrichtung zur Herstellung von Markierungsschildern, insbesondere von Markierungsschildern zur Markierung von elektronischen Bauteilen, mit einer Spritzgussmaschine zur Herstellung eines mattenförmigen Spritzgussteiles und einer in den Spritzgussprozess der Spritzgussmaschine integrierten Verarbeitungsmaschine, wobei das mattenförmige Spritzgussteil in der Verarbeitungsmaschine zu Markierungsschildern mit einer variablen Breite und/oder einer variablen Länge herstellbar ist. Dadurch, dass erfindungsgemäß eine Verarbeitungsmaschine in den Spritzgussprozess einer Spritzgussmaschine integriert ist, kann der Spritzgussprozess und damit auch die Spritzgussmaschine, insbesondere das Spritzgusswerkzeug, vereinfacht ausgeführt sein, da Aufgaben, die sonst von der Spritzgussmaschine gelöst werden, wie das Einbringen von Perforationen, durch die nachfolgende Verarbeitungsmaschine erfüllt werden kann. Dadurch kann der eigentliche Spritzgussprozess vereinfacht und kostengünstig ausgestaltet sein. Dadurch, dass ferner die endgültigen Abmessungen der Markierungsschilder nicht bereits beim Spritzgießen durch das Spritzgusswerkzeug, sondern erst beim zweiten Verfahrensschritt durch die Verarbeitungsmaschine festgelegt werden, kann für alle Markierungsschilder ein einheitliches Spritzgusswerkzeug verwendet werden. Es ist somit nicht mehr notwendig für jedes Markierungsschild ein eigenes Spritzgusswerkzeug herzustellen, wodurch eine erhebliche Kostenreduktion erzielt werden kann, da gerade das Spritzgusswerkzeug mit eines der teuersten Bauteile der Spritzgussmaschine ist. Zudem ist das erfindungsgemäße Verfahren sehr flexibel, da die Breite und/oder die Länge der Markierungsschilder individuell und schnell anpassbar ist, da dies unabhängig von dem verwendeten Spritzgusswerkzeug erfolgen kann.

Nach einer vorteilhaften Ausgestaltung der Erfindung ist die Verarbeitungsmaschine eine Schneidvorrichtung, eine Stanzvorrichtung und/oder eine Perforationsvorrichtung. Mittels der Schneidvorrichtung, der Stanzvorrichtung und/oder der Perforationsvorrichtung ist es auf einfache und kostengünstige Art und Weise möglich, die gewünschten Abmessungen für die herzustellenden Markierungsschilder zu erzeugen, wobei für jedes einzelne Markierungsschild spezielle Abmessungen leicht herstellbar sind, wodurch eine hohe Flexibilität bei der Fertigung erzielt werden kann. Besondere Ausgestaltungen der Markierungsschilder wie Rillen, Sollbruchstellen oder Durchbrüche müssen damit nicht mehr bei der Konstruktion des Spritzgusswerkzeuges berücksichtigt werden, sondern können in einem getrennten Arbeitsschritt einfach und kostengünstig in die Markierungsschilder eingebracht werden.

Die Erfindung sieht vor, dass ein Greifer vorgesehen ist, welcher das in ein Spritzgusswerkzeug der Spritzgussmaschine gespritzte mattenförmige Spritzgussteil dem Spritzgusswerkzeug entnimmt und daran anschließend das entnommene mattenförmige Spritzgussteil der Verarbeitungsmaschine zuführt. Der Greifer ist dabei vorzugsweise unmittelbar zwischen dem Spritzgusswerkzeug der Spritzgussmaschine und der Verarbeitungsmaschine angeordnet, so dass der Greifer einen möglichst geringen Weg beim Transport des mattenförmigen Spritzgussteiles überbrücken muss und der Greifer das mattenförmige Spritzgussteil direkt in die Schneidvorrichtung, die Stanzvorrichtung und/oder die Perforationsvorrichtung einlegen kann.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung eines erfindungsgemäß hergestellten mattenförmigen Spritzgussteiles gemäß einer ersten Ausführungsform und
- Fig. 2: eine schematische Darstellung eines erfindungsgemäß hergestellten mattenförmigen Spritzgussteiles gemäß einer zweiten Ausführungsform.

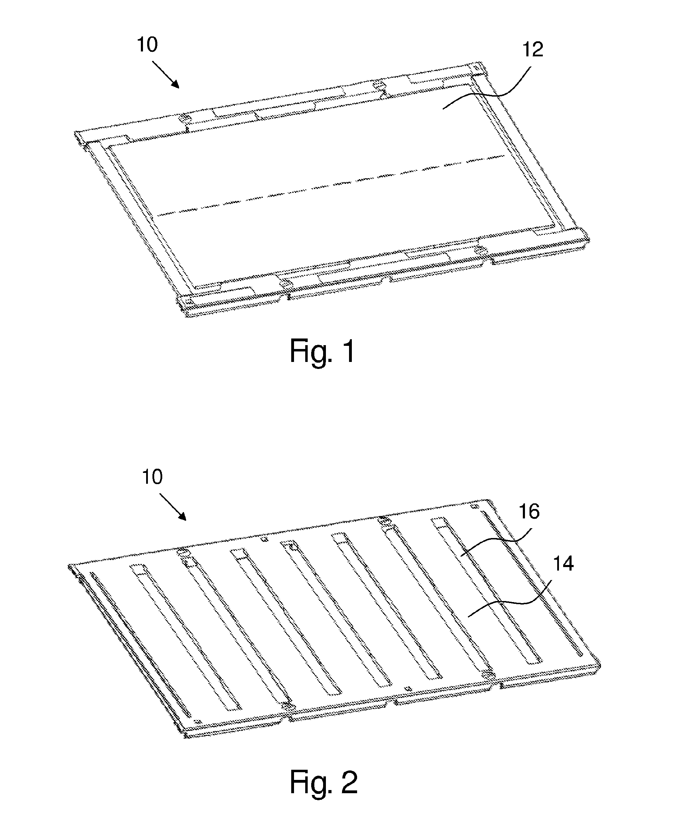

In Fig. 1 ist ein gemäß eines ersten Verfahrensschrittes erfindungsgemäß hergestelltes mattenförmiges Spritzgussteil 10 gemäß einer ersten Ausführungsform gezeigt, welches eine einstückige Fläche 12 aufweist, aus der in einem zweiten Verfahrensschritt Markierungsschilder mit einer beliebigen Breite und/oder einer beliebigen Länge hergestellt werden können. Das mattenförmige Spritzgussteil 10 wird in einem ersten Verfahrensschritt mittels eines Spritzgussverfahrens in einer Spritzgussmaschine hergestellt. Sobald das mattenförmige Spritzgussteil 10 in dem Spritzgusswerkzeug der Spritzgussmaschine ausgehärtet ist, wird das Spritzgussteil 10 mittels eines Greifers in eine Verarbeitungsmaschine eingesetzt, in welcher das mattenförmige Spritzgussteil 10 in einem zweiten Verfahrensschritt zu Markierungsschildern beliebiger Breite und/oder Länge geschnitten, gestanzt und/oder perforiert wird. Das Schneiden, das Stanzen und/oder das Perforieren des mattenförmigen Spritzgussteiles kann dabei mittels eines Lasers erfolgen oder aber auch mittels eines Schneidmessers, eines Stanzmessers und/oder eines Perforationsmittels.

Die in Fig. 1 gezeigten mattenförmigen Spritzgussteile weisen eine besonders hohe Flexibilität bei ihrer Weiterverarbeitung auf, da hierbei aus einem Spritzgussteil auch mehrere Markierungsschilder mit unterschiedlichen Abmessungen hergestellt werden können. Insbesondere bei der Herstellung von Einzelstücken sind derartige mattenförmige Spritzgussteile vorteilhaft.

Fig. 2 zeigt eine weitere mögliche Ausführungsform eines erfindungsgemäßen mattenförmigen Spritzgussteiles, welches eine Fläche 14 mit Aussparungen 16 aufweist, wobei die Fläche 14 zwischen zwei Aussparungen 16 als Markierungsschild dienen kann, dessen Länge beliebig in dem zweiten Verfahrensschritt einstellbar ist. Die Herstellung dieses mattenförmigen Spritzgussteiles 10 erfolgt dabei ebenfalls mittels eines Spritzgussverfahrens, wobei hierbei jedoch das Spritzgusswerkzeug vorzugsweise derart konstruiert ist, dass bereits beim Spritzgießen die im Spritzgussteil 10 enthaltenden Aussparungen 16 eingebracht werden. Dadurch, dass hierbei die Breite der Markierungsschilder bereits beim Spritzgussprozess während des ersten Verfahrensschrittes eingestellt wird, muss in dem zweiten Verfahrensschritt nur noch die Länge der Markierungsschilder mittels Schneiden, Stanzen und/oder Perforieren eingestellt werden, so dass der Aufwand des zweiten Verfahrensschritts reduziert werden kann. Derartige mattenförmige Spritzgussteile sind insbesondere bei der Herstellung von gleichartigen Markierungsschildern in einer höheren Stückzahl vorteilhaft.

Die gemäß des erfindungsgemäßen Verfahrens hergestellten Markierungsschilder weisen an ihrer Unterseite eine Profilierung auf, zum Beispiel in Form von winklig zueinander angeordneten Befestigungsfüßchen, welche zur Befestigung der Markierungsschilder an den elektronischen Bauteilen dienen. Eine derartige Profilierung wird dabei vorzugsweise während des ersten Verfahrensschrittes beim Spritzgießen des mattenförmigen Spritzgussteiles erzeugt, indem das Spritzgusswerkzeug entsprechend ausgestaltet ist.

### Bezugszeichenliste

- Spritzgussteiles: 10
- Fläche: 12
- Fläche: 14
- Aussparung: 16

## Patentansprüche

1. Verfahren zur Herstellung von Markierungsschildern zur Markierung von elektronischen Bauteilen, bei dem
in einem ersten Verfahrensschritt mittels eines Spritzgussverfahrens ein mattenförmiges Spritzgussteil (10) hergestellt wird, und
in einem zweiten Verfahrensschritt aus dem mattenförmigen Spritzgussteil (10) Markierungsschilder in einer beliebigen Breite und/oder einer beliebigen Länge hergestellt werden, wobei
in dem zweiten Verfahrensschritt das mattenförmige Spritzgussteil (10) in einer Schneidvorrichtung geschnitten, in einer Stanzvorrichtung gestanzt und/oder in einer Perforationsvorrichtung perforiert wird,
im ersten Verfahrensschritt in ein Spritzgusswerkzeug gespritztes mattenförmiges Spritzgussteil (10) mittels eines Greifers dem Spritzgusswerkzeug entnommen wird und das entnommene mattenförmige Spritzgussteil (10) mittels des Greifers zur Ausführung des zweiten Verfahrensschrittes der Schneidvorrichtung, der Stanzvorrichtung und/oder der Perforationsvorrichtung zugeführt wird, und
in dem ersten Verfahrensschritt das mattenförmige Spritzgussteil (10) derart hergestellt wird, dass die in dem zweiten Verfahrensschritt aus dem mattenförmigen Spritzgussteil (10) hergestellten Markierungsschilder an ihrer Unterseite eine Profilierung zur Befestigung der Markierungsschilder an den elektronischen Bauteilen aufweisen.

2. Verfahren nach Anspruch 1, wobei die Profilierung in Form von winklig zueinander angeordneten Befestigungsfüßchen ausgestaltet ist.

3. Verfahren nach einem der vorhergehenden, wobei das Schneiden, das Stanzen und/oder das Perforieren des mattenförmigen Spritzgussteiles (10) mittels eines Lasers erfolgt.

4. verfahren nach einem der vorhergehenden Ansprüche, wobei beim ersten Verfahrensschritt ein mattenförmiges Spritzgussteil (10) hergestellt wird, welches eine einstückige Fläche aufweist, aus der Markierungsschilder mit einer beliebigen Breite und Länge hergestellt werden können.

5. Verfahren nach einem der vorhergehenden Ansprüche, wobei beim ersten Verfahrensschritt ein mattenförmiges Spritzgussteile (10) hergestellt wird, welches eine Fläche mit Aussparungen aufweist, wobei die Fläche zwischen zwei Aussparungen als Markierungsschild dienen kann, dessen Länge beliebig in dem zweiten Verfahrensschritt einstellbar ist.

6. Vorrichtung zur Herstellung von Markierungsschildern zur Markierung von elektronischen Bauteilen, mit einer Spritzgussmaschine zur Herstellung eines mattenförmigen Spritzgussteils (10) und einer in den Spritzgussprozess der Spritzgussmaschine integrierten Verarbeitungsmaschine, wobei
das mattenförmigen Spritzgussteil (10) in der Verarbeitungsmaschine zu Markierungsschildern mit einer beliebigen Breite und/oder einer beliebigen Länge herstellbar ist,
die Verarbeitungsmaschine eine Schneidvorrichtung, eine Stanzvorrichtung und/oder eine Perforationsvorrichtung ist,
ein Greifer vorgesehen ist, welcher das in ein Spritzgusswerkzeug der Spritzgussmaschine gespritzte mattenförmige Spritzgussteil (10) dem Spritzgusswerkzeug entnimmt und daran anschließend das entnommene mattenförmige Spritzgussteil (10) der Verarbeitungsmaschine zuführt, und
die Spritzgussmaschine derart zur Herstellung des mattenförmigen Spritzgussteils (10) ausgestaltet ist, das die aus dem mattenförmigen Spritzgussteil (10) in der Verarbeitungsmaschine hergestellten Markierungsschilder an ihrer Unterseite eine Profilierung zur Befestigung der Markierungsschilder an den elektronischen Bauteilen aufweisen.

7. Vorrichtung nach Anspruch 6, wobei die Profilierung in Form von winklig zueinander angeordneten Befestigungsfüßchen ausgestaltet ist.

## Claims

1. A method for producing marking labels for marking electronic components, wherein
a mat-shaped injection molded part (10) is produced by means of an injection molding process in a first method step, and
marking labels having any arbitrary width and/or length are produced from the mat-shaped injection molded part (10) in a second method step, wherein
the mat-shaped injection molded part (10) is cut in a cutting device, punched in a punching device and/or perforated in a perforating device in the second method step,
the mat-shaped injection molded part (10) molded in an injection molding tool in the first method step is removed from the injection molding tool by means of a gripper, and the removed mat-shaped injection molded part (10) is fed to the cutting device, the punching device and/or the perforating device by means of the gripper to carry out the second method step, and
the mat-shaped injection molded part (10) is produced in the first method step such that the marking labels produced from the mat-shaped injection molded part (10) in the second method step are profiled on the undersides thereof for attachment of the marking labels to the electronic components.

2. The method according to claim 1, wherein the profiles are configured as small fastening bases that are arranged at an angle relative to one another.

3. The method according to any one of the preceding claims, wherein the mat-shaped injection molded part (10) is cut, punched and/or perforated by means of a laser.

4. A method according to any one of the preceding claims, wherein a mat-shaped injection molded part (10) is produced in the first method step, comprising a one-piece surface, from which marking labels having any arbitrary width and length can be produced.

5. A method according to any one of the preceding claims, wherein a mat-shaped injection molded part (10) is produced in a first method step, comprising a surface having recesses, wherein the surface between two recesses can be used as a marking label, the length of which can be adjusted as desired in the second method step.

6. A device for producing marking labels for marking electronic components, comprising an injection molding machine for producing a mat-shaped injection molded part (10) and a processing machine integrated in the injection molding process of the injection molding machine, wherein
the mat-shaped injection molded part (10) can be turned into marking labels having any arbitrary width and/or any arbitrary length in the processing machine,
the processing machine is a cutting device, a punching device and/or a perforating device,
a gripper is provided, which removes the mat-shaped injection molded part (10) molded in the injection molding tool of the injection molding machine from the injection molding tool and subsequently feeds the removed mat-shaped injection molded part (10) to the processing machine, and
the injection molding machine is designed for producing the mat-shaped injection molded part such that the marking labels produced from the mat-shaped injection molded part (10) in the processing machine are profiled on the undersides thereof for attachment of the marking labels to the electronic components.

7. The device according to claim 6, wherein the profiles are configured as small fastening bases that are arranged at an angle relative to one another.

## Revendications

1. Procédé pour la fabrication de panneaux de signalisation pour la signalisation de composants électroniques, dans lequel
une pièce moulée par injection en forme de tapis (10) est fabriquée au cours d'une première étape de procédé, et
des panneaux de signalisation sont fabriqués dans une largeur au choix et/ou une longueur au choix à partir de la pièce moulée par injection en forme de tapis (10), au cours d'une deuxième étape de procédé, dans lequel
au cours de la deuxième étape de procédé, la pièce moulée par injection en forme de tapis (10) est découpée dans un dispositif de coupe, poinçonnée dans une poinçonneuse et/ou perforée dans un dispositif perforateur,
au cours de la première étape de procédé, la pièce moulée par injection en forme de tapis (10) moulée dans un outil de moulage par injection est retirée de l'outil de moulage par injection à l'aide d'un grappin et la pièce moulée par injection en forme de tapis (10) retirée est transportée vers le dispositif de coupe, la poinçonneuse et/ou le dispositif perforateur à l'aide du grappin en vue de l'exécution de la deuxième étape de procédé, et
au cours de la première étape de procédé, la pièce moulée par injection en forme de tapis (10) est fabriquée de telle façon que les panneaux de signalisation fabriqués au cours de la deuxième étape de procédé à partir de la pièce moulée par injection en forme de tapis (10) présentent un profilage sur leur face inférieure, pour la fixation des panneaux de signalisation sur les composants électroniques.

2. Procédé selon la revendication 1, dans lequel le profilage est conçu sous la forme de petits pieds de fixation agencés en formant un angle les uns par rapport aux autres.

3. Procédé selon l'une des revendications précédentes, dans lequel le découpage, le poinçonnage et/ou la perforation de la pièce moulée par injection (10) est/sont réalisé(s) à l'aide d'un laser.

4. Procédé selon l'une des revendications précédentes, dans lequel, la première étape de procédé comprend la fabrication d'une pièce moulée par injection (10) comportant une surface unitaire à partir de laquelle des panneaux de signalisation d'une largeur au choix et d'une longueur au choix peuvent être fabriqués.

5. Procédé selon l'une des revendications précédentes, dans lequel, la première étape de procédé comprend la fabrication d'une pièce moulée par injection (10) comportant une surface avec des évidements, la surface entre deux évidements pouvant être utilisée comme panneau de signalisation, dont la longueur peut être réglée au choix au cours de la deuxième étape de procédé.

6. Dispositif pour la fabrication de panneaux de signalisation pour la signalisation de composants électroniques, avec une machine de moulage par injection pour la fabrication d'une pièce moulée par injection (10) et une machine de traitement intégrée dans le processus de moulage par injection de la machine de moulage par injection, dans lequel
la pièce moulée par injection (10) peut être transformée dans la machine de moulage par injection en panneaux de signalisation d'une largeur au choix et/ou d'une longueur au choix,
la machine de traitement est un dispositif de coupe, une poinçonneuse et/ou un dispositif perforateur,
il est prévu un grappin chargé de retirer la pièce moulée par injection (10) moulée dans un outil de moulage par injection de la machine de moulage par injection, hors de l'outil de moulage par injection, puis de transporter la pièce moulée par injection (10) retirée jusqu'à la machine de traitement, et
la machine de moulage par injection est conçue pour la fabrication de la pièce moulée par injection (10) de telle façon que les panneaux de signalisation fabriqués dans la machine de traitement à partir de la pièce moulée par injection (10) présentent un profilage sur leur face inférieure, pour fixer les panneaux de signalisation sur des composants électroniques.

7. Dispositif selon la revendication 6, dans lequel le profilage est conçu sous la forme de petits pieds de fixation agencés en formant un angle droit les uns par rapport aux autres.
